# EUROPÄISCHE PATENTSCHRIFT

(11) **EP 3 508 545 B1**
(45) Veröffentlichungstag und Bekanntmachung des Hinweises auf die Patenterteilung: **05.05.2021**
(21) Anmeldenummer: 18213617.6
(22) Anmeldetag: 18.12.2018
(51) Int. Cl.: C09J 7/40

(54) **RECYCLINGFÄHIGES RELEASESUBSTRAT**
RECYCLABLE RELEASE SUBSTRATE
SUBSTRAT DE LIBÉRATION RECYCLABLE

(30) Priorität: 22.12.2017 DE 102017131276
(43) Veröffentlichungstag der Anmeldung: 10.07.2019
(73) Patentinhaber: Mitsubishi HiTec Paper Europe GmbH, 33699 Bielefeld (DE)
(72) Erfinder: Becker, Dieter, 49124 Georgsmarienhütte (DE); El-Karzazi, Nadia, 33611 Bielefeld (DE); Kalessios, Konstantinos, 60385 Frankfurt (DE); Schlegel, Jochen, 90562 Heroldsberg (DE); Wilke, Nora, 24943 Flensburg (DE); Boxhammer, Claas, 32051 Herford (DE)
(74) Vertreter: Eisenführ Speiser

(56) Entgegenhaltungen:
- DE-A1-102007 028 497
- US-A- 2 219 071
- US-A- 4 021 060
- US-A1- 2015 037 576

## Beschreibung

Die vorliegende Erfindung betrifft ein Releasesubstrat (z. B. Trennpapier), die Verwendung eines Releasesubstrats zum Schutz von klebrigen Oberflächen von selbstklebenden Etiketten vor Verschmutzung oder versehentlichem Festkleben sowie ein Verfahren zur Herstellung eines Releasesubstrats.

Die Verwendung von selbstklebenden Etiketten ist in zahlreichen Anwendungen äußerst beliebt. So werden beispielsweise medizinische Pflaster, selbstklebenden Dekorationsfolien, Schutzfolien, Briefmarken, Paketaufkleber, Werbeetiketten, Vignetten oder Preisetiketten als selbstklebende Etiketten angeboten und verwendet. Es ist auch üblich selbstklebende Etiketten an Produkten anzubringen, wobei die Etiketten z. B. Herstellerhinweise, Anweisungen oder ein Garantieformular tragen. Die Möglichkeit Etiketten bedruckbar auszugestalten hat den Einsatzbereich von selbstklebenden Etiketten zusätzlich erweitert, so werden bedruckbare, selbstklebende Etiketten beispielsweise im Einzelhandel zur Auszeichnung von selbst auszuwiegenden Produkten oder im öffentlichen Personenverkehr - beispielsweise als Kofferaufkleber - weitgehend flächendeckend eingesetzt.

Selbstklebende Etiketten sind mit einer Klebstoffschicht ausgestattet, die es ermöglicht das selbstklebende Etikett an den gewünschten Anwendungsort zu kleben. Bis zur Verwendung des selbstklebenden Etiketts wird die Klebstoffschicht üblicherweise von einem separaten Releasepapier abgedeckt, sodass die Klebstoffschicht nicht verunreinigt wird oder das selbstklebende Etikett nicht bereits vor der erwünschten Verwendung festklebt. Die Verwendung eines separaten Releasepapiers ist insbesondere bei vorausgestanzten Etiketten bevorzugt. Bei Endlosetiketten von der Rolle ist es wesentlich beliebter und auch praktischer in ihrer Handhabung, wenn die Etiketten vorderseitig Beschichtungen aufweisen, die dehäsiv ausgebildet sind gegenüber den rückseitigen Klebstoffschichten. In diesem Fall werden die rückseitigen Klebstoffschichten bis zu ihrer Verwendung von den vorderseitig dehäsiv ausgebildeten Schichten abgedeckt. Da die selbstklebenden Etiketten somit als ihr eigenes Releasepapier dienen, kann auf ein separates Releasepapier verzichtet werden, sodass die Entsorgung des Releasepapiers am Anwendungsort entfällt. Diese Technik hat sich insbesondere bei Etiketten bewährt, die an Ort und Stelle bedruckt und verwendet werden. Ohne ein Releasepapier oder eine Releaseschicht wäre die Lagerung von Etiketten kaum möglich.

In diesem Zusammenhang haben sich insbesondere wärmeempfindliche Aufzeichnungsmaterialien bewährt, die als selbstklebende Etiketten ausgebildet sind. Wärmeempfindliche und auf die Zufuhr von externer Wärme farbbildend reagierende Aufzeichnungsmaterialien sind seit vielen Jahren bekannt und erfreuen sich einer im Grundsatz ungebrochenen Beliebtheit, was unter anderem darauf zurückzuführen ist, dass ihre Verwendung für den Ticket und/oder Kaufbelege und/oder Eintrittskarten ausgebenden Geschäftsmann mit großen Vorteilen verbunden ist. Weil die farbbildenden Komponenten, das sind Farbstoffvorläufer und mit ihnen bei der Zuführung von Wärme reagierende (Farb-)Entwickler-auch Farbakzeptoren genannt - bei einem derartigen wärmeempfindlichen Aufzeichnungsverfahren in dem Aufzeichnungsmaterial selbst enthalten sind, können deshalb toner- und farbkartuschenfreie Thermodrucker, die in ihrer Funktion von niemandem mehr regelmäßig kontrolliert werden müssen, in großer Zahl aufgestellt werden.

Als Releasepapiere werden üblicherweise Papiere verwendet, die mit einer silikonhaltigen Releaseschicht beschichtet, d.h. dehäsiv ausgebildet, sind. Die Klebstoffschicht der selbstklebenden Etiketten haftet zwar auf den silikonhaltigen Releaseschichten des Releasepapiers, allerdings lassen sich die Etiketten rückstandsfrei und einfach von dem Relesepapier abziehen (delaminieren).

In der DE 60 2004 005 746 T2 werden Drucktinten beschrieben, die neben Farbpigmenten, einem organischen Lösungsmittel, einer "Akrylharzdispergens" auch ein pflanzlich gewonnenes Wachs aufweisen.

In der DE 44 25 737 A1 wird die Herstellung sogenannter Releasepapiere (auch Trennpapiere genannt) mit dehäsiven Eigenschaften gegenüber Klebstoffschichten beschrieben, wobei Papierbahnen mit einer Silikonschicht beschichtet werden.

Diese silikonhaltigen Releasepapiere können allerdings nicht ohne Weiteres dem Papierrecycling zugeführt werden, da die silikonhaltigen Schichten den Recyclingprozess stören. Insbesondere ist es problematisch, dass die silikonhaltigen Schichten nicht wasserlöslich sind. Die Silikone werden mit dem Altpapier in die Stoffaufbereitung eingetragen und führen als klebrige Verunreinigungen oder Schmutz zu Produktionsstörungen und Qualitätsproblemen im aus dem Altpapier herzustellenden Papierprodukt. Da der Altpapiereinsatz in Deutschland über alle Papiersorten derzeit bei über 70 % liegt, ist es wünschenswert Alternativen zu silikonhaltigen Schichten zu finden, die besser recycelt werden können. Auch ist es nicht möglich diese silikonhaltigen Releasepapiere zu kompostieren, da die verwendeten silikonhaltigen Schichten nicht biologisch abgebaut werden.

Die wachsende Besorgnis über den Mangel an fossilen, nicht erneuerbaren Ressourcen, wie Erdöl oder Erdgas, hat zudem zu einem stetig wachsenden Interesse an der Produktion von Materialien aus nachwachsenden Rohstoffen geführt. In diesem Zusammenhang sei beispielsweise auf Polyethylenfuranoat, ein Kunststoff auf der Basis von 2,5-Furandicarbonsäure, verwiesen, deren Ausgangssubstanzen aus Zuckern hergestellt werden können. Die bisher bekannten Materialien aus nachwachsenden Rohstoffen zeigen allerdings keine dehäsiven Eigenschaften, sodass es bisher nicht möglich gewesen ist auf Silikone in Releasebeschichtungen zu verzichten.

Aufgabe der vorliegenden Erfindung ist es, ein Releasesubstrat bereitzustellen, das dehäsive Eigenschaften gegenüber Klebstoffen aufweist, gleichzeitig vollständig oder überwiegend aus nachwachsenden Rohstoffen hergestellt werden kann und bei dem auf die Verwendung von Silikonen verzichtet werden kann. Zusätzlich ist es wünschenswert, wenn das Releasesubstrat gut wiederverwertet oder biologisch abgebaut, d. h. kompostiert, werden kann.

Diese Aufgabe wird erfindungsgemäß gelöst durch ein Releasesubstrat (10) umfassend
a) ein Trägersubstrat (11), aufweisend eine Vorderseite und eine der Vorderseite gegenüberliegende Rückseite,
   und
b) eine vorderseitig und/oder rückseitig des Trägersubstrats angeordnete Releaseschicht (12),
   wobei die Releaseschicht (12) ein polymeres Bindemittel und ein Wachs auf Basis eines pflanzlichen Öls umfasst oder daraus besteht wobei
   - das Tragersubstrat ein Papier oder eine Pappe ist,
   das Releasesubstrat zusätzlich eine Zwischenschicht (13. 13') enthält und die Zwischenschicht zwischen dem Trägersubstrat und der Releaseschicht angeordnet ist und
   - die Zwischenschicht ein anorganisches Pigment enthält, ausgewählt aus der Liste bestehend aus kalziniertem Kaolin, Kaolin, Kaolinit, Magnesiumsilikathydrat, Siliziumoxid, Bentonit, Calziumcarbonat, Aluminiumhydroxid, Aluminiumoxid und Bohmit.

Überraschenderweise hat es sich gezeigt, dass erfindungsgemäße Releasesubstrate dehäsive Eigenschaften aufweisen und dabei vollständig oder überwiegend aus nachwachsenden Rohstoffen hergestellt werden können. Durch die Verwendung eines polymeren Bindemittels wird überraschenderweise die Releaseschicht so ausgebildet, dass Sie sich nicht vom dem Trägersubstrat löst oder dass das Wachs auf andere Gegenstände oder die Etiketten übergeht. Erfindungsgemäße Releasesubstrate können vollständig ohne die Verwendung von Silikonen oder perfluorierten Verbindungen hergestellt werden

Unter einem Wachs auf der Basis eines pflanzlichen Öls wird im Rahmen dieser Erfindung ein Wachs verstanden, das durch chemische Modifikation eines pflanzlichen Öls gewonnen wird. Bei der chemischen Modifikation kann es sich beispielsweise um eine teilweise oder vollständige Hydrierung mit einem metallischen Katalysator, beispielsweise Nickel, und Wasserstoff handeln, wobei sämtliche oder ein Teil der Doppelbindungen des Öls zu Einfachbindungen hydriert werden. Anders als pflanzliche Öle liegen die Wachse bei 20 °C nicht flüssig sondern fest vor. Die chemische Modifikation des pflanzlichen Öls bewirkt somit eine Schmelzpunkterhöhung.

Unter einem pflanzlichen Öl wird ein Fettsäuretriglycerid verstanden, das aus Pflanzen oder Pflanzenteilen gewonnen wird. Die Gewinnung des Öls erfolgt dabei üblicherweise durch Pressen, Extraktion oder Raffination der Öle aus den Pflanzen oder Pflanzenteilen. Die Gewinnung der Öle ist dem Fachmann bekannt. Werden Pflanzensamen zur Ölgewinnung benutzt, werden diese als Ölsaaten bezeichnet. In den Samen kommt das Öl in Form von Lipiden vor, die dessen Zellmembran und Energiereserven darstellen. Abhängig von dem Anteil an ungesättigten Fettsäuren im Öl wird zwischen nichttrocknenden (beispielsweise Olivenöl), halbtrocknenden (beispielsweise Soja- oder Rapsöl) und trocknenden Ölen (beispielsweise Lein- oder Mohnöl) unterschieden. Der Begriff "Trocknung" bezeichnet hierbei nicht Verdunstung, sondern das durch Oxidation und Polymerisation der ungesättigten Fettsäuren bedingte Festwerden des Öls. Die Verwendung von halbtrocknenden und trocknenden Ölen als Ausgangsstoff zur Herstellung der erfindungsgemäß verwendeten Wachse ist bevorzugt.

Mögliche Quellen für pflanzliche Öl somd Açaíöl, Algenöl, Arganöl (aus den Früchten des Arganbaums), Avocadoöl (aus dem Fruchtfleisch der Avocado des Avocadobaums), Babaçuöl, Baumwollsamenöl (aus den Samen der Baumwollpflanze), Borretschöl oder Borretschsamenöl (aus den Samen der Borretschpflanze), Cupuaçu-Butter, Cashew-Schalenöl, Distelöl (auch "Safloröl" genannt, aus den Samen der Färberdistel oder Carthamus), Erdnussöl (aus der Frucht der Erdnusspflanze), Haselnussöl (aus den Haselnüssen des Haselnussbusches), Hanföl (aus den Samen des Speisehanfs), Jatrophaöl (aus dem Samen der Jatropha curcas), Jojobaöl (eigentlich ein flüssiges Wachs; aus den Samen des Jojobastrauchs), Kamelieöl (aus den Samen der Camellia oleifera, Camellia sinensis oder Camellia japonica), Kakaobutter, Kokosöl (aus dem Samenfleisch der Kokosnuss, der Baumfrucht der Kokospalme), Kürbiskernöl (auch als Kernöl bezeichnet; aus den Samenkernen des Steirischen Ölkürbis), Leinöl (aus den reifen Leinsamen des Lein), Leindotteröl (aus den Samen des Leindotters, Familie der Kreuzblütengewächse), Macadamiaöl (aus den Nüssen des Macadamiabaums), Maiskeimöl (aus den Keimen von Mais), Mandelöl (aus den Mandeln des Mandelbaums), Mangobutter (aus Mangifera indica), Marillenkernöl bzw. Aprikosenkernöl (aus dem Aprikosenkern - also der Mandel des Aprikosensteins - der Aprikose bzw. Marille), Mohnöl (aus den Samenkörnern des Mohns), Nachtkerzenöl, Olivenöl (aus dem Fruchtfleisch und dem Kern der Olive, der Frucht des Olivenbaums), Palmöl (aus dem Fruchtfleisch der Palmfrucht, der Frucht der Ölpalme), Palmkernöl (aus den Kernen der Palmfrucht, der Frucht der Ölpalme), Papayaöl, Pistazienöl, Pekannussöl, Perillaöl aus den Samen der der Perilla-Pflanze (Shiso, Sesamblatt), Rapsöl (aus dem Samen von Raps, Familie der Kreuzblütengewächse), Reisöl, Rizinusöl (aus dem Samen des Wunderbaums), Sanddornöl (aus dem Fruchtfleisch der Sanddornbeere, der Frucht des Sanddornstrauches), Sanddornkernöl (aus den Kernen der Sanddornbeere, der Frucht des Sanddornstrauches), Senföl (aus den Samenkörnern des Schwarzen Senfs), Schwarzkümmelöl (aus den Samen der Fruchtkapsel der Schwarzkümmelpflanze), Sesamöl (aus den Samen der Sesampflanze), Sheabutter (aus den Samen des Sheanussbaums), Sojaöl (aus den Bohnen der Sojabohne), Sonnenblumenöl (aus den Kernen der Sonnenblume), Tungöl, Walnussöl (aus den Kernen der Nüsse des Walnussbaums), Wassermelonensamenöl, Traubenkernöl (aus den Kernen der Früchte (Weintraube) der Weinpflanze bzw. Weinrebe), Weizenkeimöl (aus den Keimen des Weizens) und/oder Zedernöl (aus dem Holz der Libanonzeder). Diese Liste ist nicht als abgeschlossen anzusehen, sie zeigt Möglichkeiten zur Gewinnung von pflanzlichen Ölen, welche zu einem erfindungsgemäß verwendeten Wachs umgesetzt werden können.

Erfindungsgemäß bevorzugt ist ein Releasesubstrat, wobei es sich bei dem Wachs auf Basis eines pflanzlichen Öls um ein Wachs auf Basis eines Öls handelt, ausgewählt aus der Liste umfassend Palmöl, Kokosöl, Mohnöl, Olivenöl, Leinöl, Sojaöl, Sonnenblumenöl, Distelöl und Rapsöl, vorzugsweise handelt es sich bei dem Wachs auf Basis eines pflanzlichen Öls um ein Wachs auf Basis eines Sojaöls, d. h. um Sojaölwachs bzw. Sojawachs.

Eigene Untersuchungen haben gezeigt, dass Wachse aus den oben als bevorzugt genannten Ölen besonders gute Eigenschaften aufweisen. Die aus diesen Ölen hergestellten Wachse zeichnen sich durch eine hohe Widerstandsfähigkeit aus und können mit hohen Schmelzpunkten hergestellt werden. Die erfindungsgemäß verwendeten Wachse, nämlich Palmölwachs, Kokosölwachs, Mohnölwachs, Olivenölwachs, Leinölwachs, Sojaölwachs, Sonnenblumenölwachs, Distelölwachs und Rapsölwachs, zeige beim Einsatz in erfindungsgemäßen Releasesubstraten eine signifikante Erhöhung der dehäsiven Eigenschaften. Dabei ist insbesondere die Verwendung von Sojaölwachs erfindungsgemäß bevorzugt. Eigene Untersuchungen haben gezeigt, dass beim Einsatz von Sojaölwachs neben den dehäsiven Eigenschaften auch sehr gute mechanisch Eigenschaften erhalten werden können. Das Sojaölwachs hat zudem den Vorteil, dass es Geschmacks- und Geruchsneutral hergestellt werden kann und somit auch für Etiketten verwendet werden kann, die mit Lebensmitteln in Kontakt kommen können.

Erfindungsgemäß bevorzugt sind Releasesubstrate, wobei das Wachs einen Schmelzpunkt über 40 °C, vorzugsweise über 50 °C, besonders bevorzugt über 60 °C aufweist.

Eigene Untersuchungen haben gezeigt, dass bei der Verwendung von Wachsen mit einem Schmelzpunkt von über 20 °C bereits sehr gute Ergebnisse erhalten werden können. Allerding konnte überraschenderweise gezeigt werden, dass bei der Verwendung von Wachsen mit einem Schmelzpunkt von über 40 °C die Beständigkeit der Releasesubstrate gegenüber mechanischer Belastung gesteigert werden kann. Diese Beständigkeit wird bei noch höheren Schmelzpunkten der Wachse noch weiter gesteigert. Eigene Untersuchungen haben zudem gezeigt, dass der optimale Schmelzpunkt der Wachse im Bereich von 60 bis 80 °C liegt, sofern die Releasesubstrate bei Temperaturen zwischen 6 °C und 30 °C verwendet werden sollen. Sofern die Releasesubstrate auch bei höheren Temperaturen angewendet werden sollen, kann es sinnvoll sei, ein Wachs mit höherem Schmelzpunt zu verwenden.

Erfindungsgemäß bevorzugt sind Releasesubstrate, wobei der Massenanteil des Wachses in der Releaseschicht 6 (vorzugsweise 10) bis 98 % beträgt, vorzugsweise 20 bis 90 % beträgt, besonders bevorzugt 50 bis 89 % beträgt, bezogen auf die Gesamtmasse der Releaseschicht.

Eigene Untersuchungen haben überraschenderweise gezeigt, dass bei einem Wachsmassenanteil von unter 6 % die dehäsiven Eigenschaften stark abnehmen während bei einem Wachsmassenanteil von über 98 % zwar ausgezeichnete dehäsiven Eigenschaften erhalten werden können, allerdings die mechanische Beständigkeit der Releaseschicht überproportional stark abnimmt. Dabei haben eigene Untersuchungen ergeben, dass besonders gute Releasesubstrate mit optimalen dehäsiven und mechanischen Eigenschaften erhalten werden können, wenn der Wachsmassenanteil 50 bis 89 % beträgt.

Papier, und hier speziell ein nicht oberflächenbehandeltes Streichrohpapier, das Trägersubstrat, das sich am Markt auch mit Blick auf die gute Umweltverträglichkeit wegen der guten Recyclingfähigkeit durchgesetzt hat, im Sinne der Erfindung bevorzugt. Unter einem nicht oberflächenbehandelten Streichrohpapier ist ein nicht in einer Leimpresse oder in einer Beschichtungsvorrichtung behandeltes Streichrohpapier zu verstehen.

Das Trägersubstrat ist Papier oder Pappe. Im Rahmen der vorliegenden Erfindung wird unter einem polymeren Bindemittel ein Bindemittel verstanden, das durch Polykondensation aus einer Vielzahl von Molekülen aufgebaut wurde, und in dem eine Art oder mehrere Arten von Atomen oder Atom-Gruppierungen (so genannte Wiederholungseinheiten) wiederholt aneinander gereiht sind und die Zahl der Widerholungseinheiten mehr als 25 beträgt.

Als polymere Bindemittel sind alle in der Papierherstellung gebräuchlichen Bindemittel geeignet. Eigene Untersuchungen haben allerdings gezeigt, dass eine geeignete Auswahl des Bindemittels die mechanischen Eigenschaften der Releaseschicht und/oder die biologische Abbaubarkeit des Releasesubstrats signifikant verbessern kann. Eigene Untersuchungen haben gezeigt, dass es vorteilhaft und somit erfindungsgemäß bevorzugt ist, wenn es sich bei dem polymeren Bindemittel um ein vernetztes oder unvernetztes Bindemittel handelt, ausgewählt aus der Gruppe bestehend aus Stärke, Polyvinylalkohol, carboxylgruppenmodifiziertem Polyvinylalkohol, Ethylen-Vinylalkohol-Copolymer, einer Kombination aus Polyvinylalkohol und Ethylen-Vinylalkohol-Copolymer, Ethylen-Vinylacetat-Copolymer, silanolgruppen-modifiziertem Polyvinylalkohol, diaceton-modifiziertem Polyvinylalkohol, modifiziertem Polyethylenglycol, unmodifiziertem Polyethylenglycol, α-isodecyl-ω-hydroxy-Poty(oxy-1,2-ethanediyl), Styrol-Butadien-Latex, Styrol-Acrylat-Polymeren, Acrylcopolymeren und Mischungen hieraus.

Eigene Untersuchungen haben dabei ergeben, dass erfindungsgemäße Releasesubstrate eine besonders hohe Beständigkeit gegenüber Fett, Öl und Feuchtigkeit aufweisen, wenn es sich bei dem polymeren Bindemittel um ein oder mehrere Styrol-Acrylat-Polymere handelt oder das Bindemittel diese umfasst. Eine erhöhte Beständigkeit gegenüber Fett, Öl und Feuchtigkeit ist bei Releasesubstraten ebenfalls gewünscht und führt auch zu besseren dehäsiven Eigenschaften.

Dabei ist es erfindungsgemäß bevorzugt, wenn der Massenanteil des polymeren Bindemittels in der Releaseschicht 94 bis 2 % beträgt, vorzugsweise 80 bis 10 % beträgt, besonders bevorzugt 50 bis 11 % beträgt, bezogen auf die Gesamtmasse der Releaseschicht.

Eigene Untersuchungen haben gezeigt, dass ein Gehalt an polymeren Bindemitteln unterhalb eines Massenanteils von 2 % zu Releasesubstraten führt, bei denen die mechanische Beständigkeit der Releaseschicht überproportional stark abnimmt. Bei einem Gehalt an polymeren Bindemitteln oberhalb eines Massenanteils von 94 % ist die mechanische Beständigkeit der Releaseschicht zwar ausreichen hoch, allerding hat es sich gezeigt, dass die dehäsiven Eigenschaften überproportional stark abnehmen. Dabei haben eigene Untersuchungen ergeben, dass besonders gute Releasesubstrate mit optimalen dehäsiven und mechanischen Eigenschaften erhalten werden können, wenn der Gehalt einen Masssenanteil an polymeren Bindemitteln 50 bis 11 % beträgt.

Dabei ist es erfindungsgemäß besonders bevorzugt, wenn der Massenanteil des polymeren Bindemittels in der Releaseschicht 94 bis 2 % beträgt und der Massenanteil des Wachses in der Releaseschicht 6 (vorzugsweise 10) bis 98 % beträgt und es ist noch weiter bevorzugt, wenn der Massenanteil des polymeren Bindemittels in der Releaseschicht 80 bis 10 % beträgt und der Massenanteil des Wachses in der Releaseschicht 80 bis 90 % beträgt und es ist noch weiter bevorzugt, wenn der Massenanteil des polymeren Bindemittels in der Releaseschicht 50 bis 11 % beträgt und der Massenanteil des Wachses in der Releaseschicht 50 bis 89 % beträgt.

Eigene Untersuchungen haben gezeigt, dass durch die Wahl der oben als bevorzugt beschriebenen polymeren Bindemittel und durch das Einstellen des Verhältnisses zwischen polymeren Bindemitteln und Wachs die dehäsiven Eigenschaften auf die verschieden stark klebenden Klebstoffe eingestellt werden können. Hierdurch ist es möglich, exakt definierte bzw. kontrollierte Trenneigenschaften der Releaseschicht einzustellen.

Erfindungsgemäß bevorzugt sind Releasesubstrate, bei denen die flächenbezogene Masse der Releaseschicht im Bereich von 1,0 bis 8 g/m² liegt, vorzugsweise im Bereich von 2,0 bis 5,5 g/m² liegt, besonders bevorzugt im Bereich von 3,0 bis 5,0 g/m² liegt. Es hat sich überraschenderweise gezeigt, dass Releasesubstrate mit den hier angegebenen geringen flächenbezogenen Massen sehr gute dehäsive Eigenschaften aufweisen. Zwar kann die Beständigkeit durch Erhöhung der flächenbezogenen Masse leicht verbessert werden, allerding ist die Verbesserung nur minimal, sodass der erhöhte Materialverbauch die geringe Verbesserung nicht rechtfertigt. Bei einer flächenbezogenen Masse von unter 1,0 g/m² wird die die Beständigkeit des reinen Trägersubstrates zwar ebenfalls verbessert, allerdings reicht die Beständigkeit für einige Anwendungsbereiche (z. B. stark klebeende Etiketten) nicht immer aus. Eigene Untersuchungen haben gezeigt, dass optimale Eigenschaften erhalten werden können, wenn die flächenbezogene Masse der Releaseschicht im Bereich von 1,5 bis 5,0 g/m² liegt.

Eigene Untersuchungen haben gezeigt, dass es besonders vorteilhaft ist, wenn das polymere Bindemittel aus zwei oder mehr polymeren Bindemitteln besteht und zumindest ein Bindemittel ein anionisches Bindemittel ist. Unter einem anionischen Bindemittel wird dabei ein Bindemittel verstanden, das mehrere negative Ladungen enthält, die durch Kationen (z. B. Metallkationen oder Ammonium) stabilisiert werden.

Dabei ist es erfindungsgemäß bevorzugt, wenn die anhand dynamischer Differenzkalorimetrie (DSC) bestimmte Glasübergangstemperatur des anionischen Bindemittels kleiner gleich 120 °C ist. Eigenen Untersuchungen haben gezeigt, dass bei einer Glasübergangstemperatur von über 120 °C die Herstellung der Releaseschicht sehr schwierig ist und die hergestellten Releasesubstrate nicht so gute Eigenschaften aufweisen, wie erfindungsgemäße Releasesubstrate, die unter Verwendung eines anionischen Bindemittels mit einer Glasübergangstemperatur von kleiner gleich 120 °C hergestellt wurden.

Es ist dabei erfindungsgemäß bevorzugt, wenn es sich bei dem anionischen Bindemittel um ein Copolymer handelt.

Geeignete anionische Bindemittel sind beispielsweise teilweise oder vollständig deprotonierte Polyacrylsäure (oder Copolymere davon, beispielsweise mit Acrylsäreestern), teilweise oder vollständig deprotonierte Polymethacrylsäure (oder Copolymere davon, beispielsweise mit Methacrylsäreestern), Copolymere von Polyacrylsäureester (vorzugsweise Methyl- oder Ethylester), Copolymere von Polymethacrylsäureester (vorzugsweise Methyl- oder Ethylester) oder Polyacrylamide oder Copolymere davon.

Es ist erfindungsgemäß bevorzugt, wenn eine wässrige Lösung oder Dispersion des anionischen Bindemittels einen basischen pH-Wert aufweist, sofern es mit einem Massenanteil von 10 % in Wasser gelöst oder dispergiert vorliegt, vorzugsweise im Bereich von 8 bis 10.

Um den pH-Wert des anionischen Bindemittels zu bestimmen, kann eine wässrige Lösung oder Dispersion des anionischen Bindemittels hergestellt werden, die einen Massenanteil von 10 % aufweist und der pH-Wert kann mit gängigen Mitteln bestimmen werden.

In einer ebenfalls bevorzugten Ausgestaltung der vorliegenden Erfindung umfasst die Releaseschicht (12) zusätzlich ein Wachs auf Basis gesättigter Kohlenwasserstoffe.

Eigene Untersuchungen haben überraschenderweise gezeigt, dass die Kombination aus einem Wachs auf Basis eines pflanzlichen Öls und einem Wachs auf Basis gesättigter Kohlenwasserstoffe zu besonders guten Releaseeigenschaften führt. Die Kombination von gesättigten Kohlenwasserstoffen und Wachsen aus Fettsäuretriglycerid scheint zu Schichten mit besonders hohen Molekulardichten zu führen. Ohne sich auf eine bestimmte Theorie festlegen zu wolle, lässt die hohe Molekulardichte damit erklären, dass die gesättigten Kohlenwasserstoffe, die lipophilen Teile der Wachse aus Fettsäuretriglyceriden ausfüllen. Hierdurch wird eine Releaseeigenschaft erreicht, die mit den Wachsen aus Fettsäuretriglyceriden oder aus Wachsen auf Basis von gesättigten Kohlenwasserstoffen alleine nicht erreicht werden kann. Die Kombination aus einem Wachs auf Basis eines pflanzlichen Öls und einem Wachs auf Basis gesättigter Kohlenwasserstoffe weist somit einen synergistischen Effekt auf, der zu besonders guten Releaseeigenschaften führt.

Dieser synergistische Effekt ist besonders ausgeprägt, wenn es sich bei dem Wachs auf Basis gesättigter Kohlenwasserstoffe um Octacosan handelt und/oder bei dem Wachs auf Basis eines pflanzlichen Öls um ein Wachs auf Basis von Sojaöl handelt.

Erfindungsgemäß bevorzugt sind Releasesubstrate, wobei das Wachs auf Basis gesättigter Kohlenwasserstoffe einen Schmelzpunkt über 40 °C, vorzugsweise über 50 °C, besonders bevorzugt über 60 °C aufweist.

Erfindungsgemäß bevorzugt sind Releasesubstrate, wobei das Wachs auf Basis gesättigter Kohlenwasserstoffe ein, zwei, drei oder mehr als drei Alkane enthält oder daraus besteht ausgewählt aus der Gruppe bestehend aus Heneicosan, Docosan, Tricosan, Tetracosan, Pentacosan, Hexacosan, Heptacosan, Octacosan, Nonacosan, Triacontan, Hentriacontan, Dotriacontan, Tritriacontan, Tetratriacontan, Pentatriacontan, Hexatriacontan, Heptatriacontan, Octatriacontan und Nonatriacontan, vorzugsweise ausgewählt aus der Gruppe bestehend aus Hexacosan, Heptacosan, Octacosan, Nonacosan und Triacontan. Erfindungsgemäß besonders bevorzugt sind Barrierepapiere, wobei das Wachs auf Basis gesättigter Kohlenwasserstoffe ein Wachs auf Basis von Octacosan ist.

Erfindungsgemäß besonders bevorzugt handelt es sich bei dem Acrylat-Copolymer in der Barriereschicht um ein Copolymer mit einer mittleren molaren Masse im Bereich von 50.000 bis 150.000 g/mol, vorzugsweise im Bereich von 80.000 bis 130.000 g/mol, besonders bevorzugt im Bereich von 90.000 bis 100.000 g/mol. Die mittlere molare Masse wird dabei unter Zuhilfenahme einer Gelpermeationschromatographie (GPC) mit Tetrahydrofuran (THF; Tetramethylenoxid; 1,4-Epoxybutan; Oxacyclopentan) als Lösungsmittel, Polystyrol als Standard und Detektion anhand RI-Detektor (Brechnungsindex-Detektor) bestimmt.

Erfindungsgemäß besonders bevorzugt handelt es sich bei dem Acrylat-Copolymer in der Barriereschicht um ein Copolymer hergestellt unter Verwendung von zwei, drei, vier, fünf, sechs oder sämtlichen Monomeren ausgewählt aus der Gruppe bestehend aus Acrylsäuremethylester, Methacrylsäuremethylester, Acrylsäurebutylester, Methacrylsäurebutylester, Acrylsäure-2-ethylhexylester, Methacrylsäure-2-ethylhexylester und Styrol.

Durch eine Auswahl der zur Herstellung des Acrylat-Copolymers verwendeten Monomere lassen sich die Eigenschaften des resultierenden Acrylat-Copolymers optimieren. Eigene Untersuchungen haben dabei überraschenderweise gezeigt, dass ein Acrylat-Copolymer, das aus Acrylsäuremethylester, Methacrylsäuremethylester, Acrylsäurebutylester, Methacrylsäurebutylester, Acrylsäure-2-ethylhexylester, Methacrylsäure-2-ethylhexylester und/oder Styrol hergestellt wurde, besonders gute Releaseeigenschaften aufweist.

Neben Acrylsäuremethylester, Methacrylsäuremethylester, Acrylsäurebutylester, Methacrylsäurebutylester, Acrylsäure-2-ethylhexylester, Methacrylsäure-2-ethylhexylester und Styrol können dabei weitere Monomere zur Herstellung des Acrylat-Coplymers verwendet worden sein oder das Copolymer wurde hergestellt aus zwei, drei, vier, fünf, sechs oder sämtlichen Monomeren ausgewählt aus der Gruppe bestehend aus Acrylsäuremethylester, Methacrylsäuremethylester, Acrylsäurebutylester, Methacrylsäurebutylester, Acrylsäure-2-ethylhexylester, Methacrylsäure-2-ethylhexylester und Styrol.

Erfindungsgemäß besonders bevorzugt handelt es sich bei dem Acrylat-Copolymer um ein statistisches Copolymer.

Erfindungsgemäß besonders bevorzugt ist ein Releasesubstrat (10) umfassend
a) ein Papiersubstrat (11), aufweisend eine Vorderseite und eine der Vorderseite gegenüberliegende Rückseite,
   und
b) eine vorderseitig und/oder rückseitig des Papiersubstrats angeordnete Releaseschicht (12), bestehend aus oder umfassend
   i) ein Acrylat-Copolymer mit einer mittleren molaren Masse im Bereich von 50.000 bis 150.000 g/mol, wobei das Acrylat-Copolymer aus zwei, drei, vier, fünf, sechs oder sieben Monomeren hergestellt wurde ausgewählt aus der Gruppe bestehend aus Acrylsäuremethylester, Methacrylsäuremethylester, Acrylsäurebutylester, Methacrylsäurebutylester, Acrylsäure-2-ethylhexylester, Methacrylsäure-2-ethylhexylester und Styrol,
      und
   ii) ein Wachs auf Basis gesättigter Kohlenwasserstoffe, wobei es sich bei dem Wachs auf Basis gesättigter Kohlenwasserstoffe vorzugsweise um Octacosan handelt oder wobei das Wachs auf Basis gesättigter Kohlenwasserstoffe vorzugsweise Octacosan umfasst
      und
   iii) ein Wachs auf Basis eines pflanzlichen Öls.

Ein Releasesubstrat ist erfindungsgemäß bevorzugt, wobei das Massenverhältnis zwischen dem polymeren Bindemittel und dem Wachs auf Basis gesättigter Kohlenwasserstoffe 999 : 1 bis 70 : 30 beträgt, vorzugsweise 99 : 1 bis 80 : 20 beträgt, besonders bevorzugt 95 : 5 bis 85 : 15 beträgt.

In einer Ausgestaltung der vorliegenden Erfindung umfasst die Releaseschicht (12) keine Farbmittel, insbesondere keine organischen (ggf. synthetischen) oder anorganischen Farbmittel (oder Farbpigmente). Insbesondere enthält die Releaseschicht erfindungsgemäß vorzugsweise kein Kohlenschwarz als Pigment. Insbesondere umfasst die erfindungsgemäße Releaseschicht (12) keine der in den Absätzen [0060] bis [0063] der DE 602004005746 T1 beschriebene Farbmittel, die dort als Pigmente oder Färbemittel bezeichnet werden.

Ein Releasesubstrat ist erfindungsgemäß bevorzugt, wobei die Releaseschicht (12) vollflächig vorderseitig und/oder rückseitig auf dem Trägersubstrat angeordnet ist. Im Rahmen der vorliegenden Erfindung wir unter vollflächig eine Beschichtung von über 99% der Fläche verstanden. Ein Releasesubstrat ist erfindungsgemäß bevorzugt, wobei die Releaseschicht (12) keine organischen Lösungsmittel enthält, insbesondere keine Alkohole (wie Beispielsweise Methanol, Ethanol, Propanol, Isopropanol, n-Butylalkohol, Isobutylalkohol oder sec-Butylalkohol) Ketone, Ester, Ether, aliphatische Lösungsmittel, aromatische Lösungsmittel enthält. Diese Lösungsmittel lassen sich nicht in den aus dem Releasestrich hergestellten Releaseschichten vollständig entfernen und verbleiben in Spuren in den hergestellten Releaseschichten.

Das Releasesubstrat enthält zusätzlich eine Zwischeschicht wobei die Zwischenschicht zwischen dem Trägersubstrat und der Releaseschicht angeordnet ist. Es hat sich in eigenen Untersuchungen gezeigt, dass die Eigenschaften des resultierenden Releasesubstrats besonders gut sind, wenn die Releaseschicht nicht direkt auf das Trägersubstrat aufgetragen wird, sondern zunächst eine Zwischenschicht auf das Trägersubstrat aufgetragen wird. Dies ist insbesondere vorteilhaft, wenn es sich bei dem Trägersubstrat um ein Papiersubstrat oder Pappsubstrat handelt

Die Zwischenschicht enthält ein anorganisches Pigment ausgewählt aus der Liste bestehend aus kalziniertem Kaolin, Kaolin, Kaolinit, Magnesiumsilikathydrat, Siliziumoxid, Bentonit, Calziumcarbonat, Aluminiumhydroxid, Aluminiumoxid und Böhmit.

Eigene Untersuchungen haben gezeigt, dass besonders gute Eigenschaften erhalten werden könne, wenn das Pigment plättchenförmig ausgeformt ist, vorzugsweise mit einem Aspektverhältnis von 5 bis 100, bevorzugt von 15 bis 100, weiter bevorzugt von 20 bis 80. Bei dem Aspektverhältnis handelt es sich um den Quotienten zwischen dem Durchmesser und der Dicke des Plättchens des Pigments vor dem Vermischen mit den weiteren Komponenten. Ein Aspektverhältnis von 20 bedeutet, dass der Durchmesser des Plättchens 20 mal größer ist, als die Dicke des Plättchens. Beispielsweise Kaolin, Kaolinit und Talk sind plättchenförmig und sind als Pigment daher besonders bevorzugt.

Ein Releasesubstrat ist erfindungsgemäß bevorzugt, wenn der Massenanteil des Pigments in der Zwischenschicht 5 bis 60 % beträgt, vorzugsweise 15 bis 40 % beträgt, besonders bevorzugt 20 bis 40 % beträgt, bezogen auf die Gesamtmasse der Zwischenschicht.

Ein Releasesubstrat ist erfindungsgemäß bevorzugt, wenn die Zwischenschicht ein Bindemittel enthält, und es sich bei dem Bindemittel vorzugsweise um ein vernetztes oder unvernetztes Bindemittel handelt, ausgewählt aus der Gruppe bestehend aus Stärke, Polyvinylalkohol, carboxylgruppenmodifiziertem Polyvinylalkohol, Ethylen-Vinylalkohol-Copolymer, einer Kombination aus Polyvinylalkohol und Ethylen-Vinylalkohol-Copolymer, Ethylen-Vinylacetat-Copolymer, silanolgruppen-modifiziertem Polyvinylalkohol, diaceton-modifiziertem Polyvinylalkohol, Acrylat-Copolymer, modifiziertem Polyethylenglycol, unmodifiziertem Polyethylenglycol, α-isodecyl-ω-hydroxy-Poly(oxy-1,2-ethanediyl), Styrol-Butadien-Latex, Styrol-Acrylat-Polymeren, filmbildenden Acrylcopolymeren und Mischungen hieraus.

Ein Releasesubstrat ist erfindungsgemäß bevorzugt, wenn das Bindemittel ein oder mehrere Acrylat-Copolymere und/oder Styrol-Acrylat-Polymere umfasst oder daraus besteht.

In einer Ausgestaltung des erfindungsgemäßen Releasesubstrates kann das Trägersubstrat auf der Rückseite des Trägersubstrates, d.h. der Seite des Trägersubstrates auf der keine Releaseschicht angeordnet ist, mit einer Rückseitenschicht beschichtet sein. Diese Rückseitenschicht kann dieselbe Ausgestaltung aufweisen, wie die weiter oben beschriebene Zwischenschicht.

In einer weiteren Ausgestaltung des erfindungsgemäßen Releasesubstrates kann das Trägersubstrat sowohl eine Rückseitenschicht als auch eine Zwischenschicht aufweisen, wobei diese Schichten dieselbe Ausgestaltung aufweisen, wie die weiter oben beschriebene Zwischenschicht.

In einer weiteren Ausgestaltung des erfindungsgemäßen Releasesubstrates kann das Trägersubstrat beidseitig mit der Releaseschicht beschichtet sein, wobei es erfindungsgemäß bevorzugt ist, wenn beide Releaseschichten ein polymeres Bindemittel und ein Wachs auf Basis eines pflanzlichen Öls umfassen oder daraus bestehen und dabei die oben für die Releaseschicht beschriebenen Ausgestaltungen aufweisen können.

Ein Releasesubstrat ist erfindungsgemäß bevorzugt, wobei das Releasesubstrat zusätzlich eine zwischen der Releaseschicht und dem Trägersubstrat angeordnete wärmeempfindliche Aufzeichnungsschicht (14) aufweist. Wärmeempfindliche Aufzeichnungsschichten enthalten mindestens einen Farbstoffvorläufer und mindestens einen mit diesem mindestens einen Farbstoffvorläufer reaktionsfähigen (Farb-)Entwickler. Hierbei ist es besonders bevorzugt, wenn die wärmeempfindliche Aufzeichnungsschicht zwischen einer auf dem Trägersubstrat angeordneten Zwischenschicht und einer Releaseschicht angeordnet ist.

Überraschenderweise hat es sich gezeigt, dass erfindungsgemäß eingesetzte Releaseschichten eine hohe bis ausreichende Transparenz aufweisen, sodass ein Druckbild, das in der unter der Releaseschicht befindlichen wärmeempfindlichen Aufzeichnungsschicht gedruckt wurde, gelesen werden kann.

Beispiele für die Zusammensetzung einer wärmeempfindlichen Aufzeichnungsschicht sind folgender Tabelle zu entnehmen:

| Funktion | Handelsname | Chem. Bezeichnung | CAS Nummer | Massenanteile [%] |
|---|---|---|---|---|
| Entwickler | D8 | 4-Hydroxy-4'-isopropoxydiphenylsulfone | 95235-30-6 | 27-29 |
| Sensitizer | EGTE | 1,2-Bis-(3-Methyl-phenoxy)-ethan | 54914-85-1 | 19-21 |
| Pigment | Martifin OL 107 | Aluminium hydroxide | 21645-51-2 | 9,5-11,5 |
| Optischer Aufheller | Tafluonol CPD T/P | 1,4-Benzenedisulfonic acid, 2,2'-(1,2-ethenediylbis((3-sulfo-4,1-phenylene)imino(6-(4-morpholinyl)-1,3,5-triazine-4,2-diyl)imino))bis-, hexasodium salt | 52301-70-9 | 0,25-0,5 |
| Binder | NL-08 | PVA | | 9,5-11,5 |
| Binder | Gohsefirm er Z-200 | Acetoacetyl modifiziertes PVA | | 2,5-3,5 |
| Additiv | Hidorin J-157 | Paraffin wax | 8002-74-2 | 2,5-3,5 |
| Farbgeber | ODB-2 | 3-dibutylamino-6-methyl-7-Anilinofluoran | 89331-94-2 | 18-20 |

Alternative Beschichtungszusammensetzungen zur Herstellung einer wärmeempfindlichen Aufzeichnungsschicht können beispielsweise folgende Komponenten umfassen
- einen oder mehrere Farbstoffvorläufer; und
- einen oder mehrere Farbentwickler, wobei der eine oder zumindest einer der mehreren Farbentwickler eine Verbindung ist, die im Farbentwickler
   a) mindestens eine (lineare) strukturelle Einheit der Formel (I) (im Folgenden auch als Milchsäure-Einheit verstanden und bezeichnet) 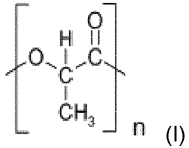 enthält, wobei n eine ganze Zahl von 1 bis 10, vorzugsweise von 1 bis 6, ist;
      und
   b) unabhängig voneinander, eine, zwei oder mehr endständige Elektronenakzeptorgruppen enthält, wobei mindestens eine der Elektronenakzeptorgruppen keine Carboxylgruppe (-COOH) ist, die aus Milchsäure und/oder einer Polymilchsäure mit der strukturellen Einheit der Formel (I) stammt;
      mit der Maßgabe, dass der eine oder der zumindest eine der mehreren Farbentwickler keine Verbindung der Formel (A) ist, 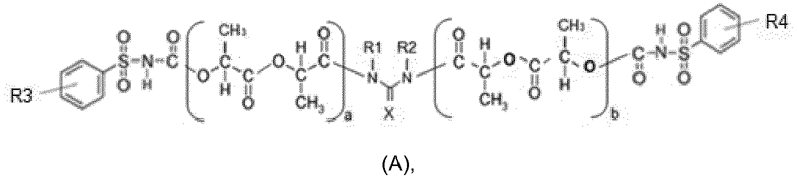 wobei X für O, S oder NH steht; R1 und R2 unabhängig voneinander für ein Wasserstoffatom, eine C1-C6-Alkylgruppe, eine C3-C6-Cycloalkylgruppe oder eine C2-C6-Alkenylgruppe stehen; R3 und R4 unabhängig voneinander für ein Wasserstoffatom, eine C1-C6-Alkylgruppe, eine C1-C6-Alkoxygruppe oder eine Halogengruppe stehen; und a und b jeweils für eine ganze Zahl stehen und die Bedingungen a ≥ 0, b ≥ 0 und (a+b) ≥ 1 erfüllen.

Es hat sich gezeigt, dass diese wärmeempfindlichen Aufzeichnungsschichten, die Milchsäure-Einheiten umfassende Farbentwickler aufweisen, aus nachwachsenden Rohstoffen erzeugt werden können. Die Kombination aus diesen wärmeempfindlichen Aufzeichnungsschichten mit erfindungsgemäß verwendeten Releaseschichten führt zu wärmeempfindlichen Aufzeichnungsmaterialien mit einer Releaseschicht die vollständig oder überwiegend aus nachwachsenden Rohstoffen erzeugt werden können und zudem auch recyclierbar oder kompostierbar sein können. Die Kombination ist somit deutlich umweltverträglicher als alle bisher im Stand der Technik bekannten Thermopapiere mit Releaseschicht.

In einer Ausgestaltung der vorliegenden Erfindung kann die Releaseschicht im Zusammenhang mit einer auf der anderen Seite angeordneten klebstoffhaltigen Schicht (15) verwendet werden, um einem in Rolle gewickelten Papiersubstrat, das einerseits die Releaseschicht und andererseits die Klebeschicht aufweist, ein Abrollen des beschichteten Substrats in einfacher Weise zu ermöglichen.

Beispielsweise wird also eine wärmeempfindliche Aufzeichnungsschicht, um eine Thermofunktionalität zu ermöglichen, auf dem Vorstrich realisiert. Als nächste Schicht kann optional eine Streichfarbe zur Ausbildung einer Schutzschicht aufgebracht werden, beispielsweise eine Schutzschicht ausgebildet als pigmenthaltiger Schutzstrich, der auch "Topcoat" genannt werden kann. Diese Schicht dient zur Verbesserung der mechanischen Beständigkeit des Schichtverbunds. Bevorzugt kann jedoch auf die wärmeempfindliche Aufzeichnungsschicht direkt die Releaseschicht aufgebracht werden. Die Releaseschicht kann alternativ auch auf die Schutzschicht aufgebracht werden. Auf der der Releaseschicht gegenüberliegenden Seite des Trägersubstrats wird häufig eine klebstoffhaltige Streichfarbe aufgebracht. Vor der klebstoffhaltigen Streichfarbe kann ebenfalls eine Streichfarbe als Vorstrich bzw. Rückseitenstrich auf das Trägersubstrat aufgebracht werden. Das Aufbringen einer Streichfarbe als Rückseitenstrich kann auch ohne das Aufbringen weiterer Streichfarben auf die Rückseite eines Trägersubstrats erfolgen. Ein derartig beschichtetes Substrat dient dann für die Herstellung von Klebeetiketten, wie sie beispielsweise in den Waagen mit integrierten oder angeschlossenen Thermodruckern in der Gemüseabteilung eines Supermarktes eingesetzt werden können.

Beispiele für pigmenthaltige Schutzstriche sind folgender Tabelle zu entnehmen:

| Funktion | Handelsname | Chem. Bezeichnung | Massenanteile [%] |
|---|---|---|---|
| Pigment | ASP 179 | Kaolin | 30 bis 40 |
| Pigment | Sipernat 22S | Kieselsäure | 2 bis 4 |
| Polivinylalkohol | Gohsenx Z-410 | Acetoacetyl-modifiziertes Polyvinylalkohol | 5 bis 15 |
| Polyvinylalkohol | Gohsenx Z-200 | Acetoacetyl-modifiziertes Polyvinylalkohol | 20 bis 50 |
| Vernetzer | Giluton 20XP | Polyamidamin Epichlorhydrin Harz | 1,5 bis 3,5 |
| Alkylen/(Meth)-Acrylsäure-Copolymer | Aquacer1061 | Ethylen-Acrylsäure Copolyme | 1,5 bis 4,5 |
| Vernetzer | SPM-01/SPM-02 | Natrium/Calciumglyoxylat | 0,5 bis 2,0 |

Ein weiterer Aspekt der vorliegenden Erfindung betrifft eine Verwendung eines erfindungsgemäßen Releasesubstrates, zum Schutz von klebrigen Oberflächen von selbstklebenden Etiketten vor Verschmutzung oder versehentlichem Festkleben oder als Transfersubstrat.

Es ist erfindungsgemäß bevorzugt, wenn die Releaseschicht des Releasesubstrates eine nach ISO 5627 bestimmte Bekk-Glätte im Bereich von 100 bis 1200 s aufweist. Abweichend zur ISO 5627 wird die Bekk-Glätte dabei nicht beidseitig auf dem Releasesubstrat bestimmt, sondern nur auf der Releaseschicht des Releasesubstrates.

Ein weiterer Aspekt der vorliegenden Erfindung ist die Verwendung eines erfindungsgemäßen Releasesubstrates als selbstklebendes Ticket, selbstklebenden Kaufbeleg, selbstklebendes Etikett oder selbstklebende Eintrittskarten.

Ein weiterer Aspekt der vorliegenden Erfindung betrifft ein Verfahren zur Herstellung eines Releasesubstrats, vorzugsweise eines erfindungsgemäßen Releasesubstrats, umfassend die folgenden Schritte
(i) Herstellen oder Bereitstellen eines Trägersubstrates
   a) Herstellen oder Bereitstellen eines Strichs, umfassend Pigmente und Bindemittel
   b) Auftragen des hergestellten oder bereitgestellten Strichs auf eine Seite des Trägersubstrates und anschliessendes Trocknen des Strichs, sodass eine Zwischenschicht resultiert,
(ii) Herstellen oder Bereitstellen eines Releasestrichs umfassend eine Wachs-Emulsion, wobei das Wachs ein Wachs auf Basis eines pflanzlichen Öls ist,
(iii) Auftragen des Releasestrichs auf eine Seiten des Trägersubstrates und anschließendes Trocknen des Releasestrichs, sodass eine Releaseschicht resultiert.

Dabei ist es erfindungsgemäß bevorzugt, wenn die Wachs-Emulsion eine Wachs in Öl Emulsion ist und die Wachs-Emulsion zusätzlich ein anionisches polymeres Bindemittel enthält, das vorzugsweise dazu geeignet ist, die Wachs-Emulsion zu stabilisieren.

Dabei ist es erfindungsgemäß bevorzugt, wenn der hergestellte oder bereitgestellte Releasestrich neben der Wachs-Emulsion ein (weiteres) polymeres Bindemittel enthält.

Erfindungsgemäß bevorzugt ist es, wenn die durchschnittliche Partikelgröße der Wachspartikel im Bereich von 600 bis 1100 nm liegt, vorzugsweise im Bereich von 700 bis 1000 nm liegt. Die Partikelgröße der Wachspartikel lässt sich anhand Laserbeugungs-Partikelgrößenanalyse bestimmen. Eigenen Untersuchungen haben gezeigt, dass Partikel in dieser Größenordnung zu Releaseschichten mit sehr guten dehäsiven und mechanischen Eigenschaften führen, da eine gute Durchmischung zwischen polymeren Bindemittel und Wachspartikeln erfolgt.

Es ist erfindungsgemäß bevorzugt, wenn die Wachs-Emulsion basisch ist und vorzugsweise eine pH-Wert im Bereich von 8 bis 10 aufweist.

Es ist erfindungsgemäß bevorzugt, wenn das Wachs auf Basis eines pflanzlichen Öls ein Sojawachs ist.

Es ist erfindungsgemäß bevorzugt, wenn das Trocknen des Releasestrichs bei einer Temperatur oberhalb des Schmelzpunktes des Wachses (z.B. bei 40, 60, 80 oder 100 °C) erfolgt und/oder in einem separaten Schritt das den (ggf. getrockneten) Releasestrich enthaltende Trägersubstrat oberhalb des Schmelzpunktes des Wachses erwärmt wird (z. B. auf 40, 60, 80 oder 100 °C).

In einer erfindungsgemäßen Ausgestaltung des Verfahrens wird als Trägersubstrat ein beschichtetes Trägersubstrat, Papiersubstrat, verwendet oder es erfolgt ein Auftragen eines Strichs auf eine Seiten des Trägersubstrat und anschließendes Trocknen der Strichs, sodass eine Zwischenschicht resultiert, bevor der Releasestrich aufgetragen wird. Das erfindungsgemäße Verfahren weist somit bevorzugt zusätzlich die folgenden Schritte auf
a) Herstellen oder Bereitstellen einer Strichs, umfassend Pigmente und Bindemittel,
b) Auftragen des hergestellten oder bereitgestellten Strichs auf eine Seite des Papiersubstrates und anschließendes Trocknen des Strichs, sodass eine Zwischenschicht resultiert,
   wobei die Schritte a) und b) vorzugsweise zwischen den Schritten i) und ii) durchgeführt werden.

Ein erfindungsgemäßes Verfahren ist bevorzugt, das zusätzlich die folgenden Schritte aufweist
c) Herstellen oder Bereitstellen einer Thermostrichs, umfassend zumindest einen Farbstoffvorläufer und einen mit dem Farbstoffvorläufer bei der Zuführung von Wärme reagierenden (Farb-)Entwickler,
d) Auftragen des hergestellten oder bereitgestellten Thermostrichs auf eine Seite des Papiersubstrates und anschließendes Trocknen des Strichs, sodass eine wärmeempfindliche Aufzeichnungsschicht resultiert,
   wobei die Schritte c) und d) vorzugsweise zwischen den Schritten i) und ii) durchgeführt werden, besonders bevorzugt nach den Schritten a) und b), wobei die der Thermostrich vorzugsweise auf die Zwischenschicht aufgetragen wird.

Ein erfindungsgemäßes Verfahren ist bevorzugt, das zusätzlich die folgenden Schritte aufweist
e) Herstellen oder Bereitstellen einer Klebstoffes,
f) Auftragen des hergestellten oder bereitgestellten Klebstoffes auf die Rückseite (bzw. der der Releaseschicht abgewandten) Seite des Papiersubstrates,
   wobei die Schritte e) und f) vorzugsweise nach dem Schritt iii) durchgeführt werden.

Ein erfindungsgemäßes Verfahren ist bevorzugt, wobei der verwendete Releasestrich keine organischen Lösungsmittel enthält, insbesondere keine Alkohole (wie Beispielsweise

Methanol, Ethanol, Propanol, Isopropanol, n-Butylalkohol, Isobutylalkohol oder sec-Butylalkohol) Ketone, Ester, Ether, aliphatische Lösungsmittel, aromatische Lösungsmittel enthält. Diese Lösungsmittel lassen sich nicht in den aus dem Releasstrich hergestellten Releaseschichten vollständig entfernen und verbleiben in Spuren in den hergestellten Releaseschichten.

Ein weiterer Aspekt der vorliegenden Erfindung betrifft ein Releasesubstrat hergestellt durch ein erfindungsgemäßes Verfahren.

Ein weiterer Aspekt der vorliegenden Erfindung betrifft die Verwendung eines Wachs auf Basis eines pflanzlichen Öls zur Herstellung einer Beschichtung, vorzugsweise zur Herstellung einer Releaseschicht auf einem Träger. Besonders bevorzugt handelt es sich bei dem Träger um ein Papier, eine Pappe oder einen Karton.

Im Rahmen der vorliegenden Erfindung werden vorzugsweise mehrere der vorstehend als bevorzugt bezeichneten Aspekte gleichzeitig verwirklicht; insbesondere bevorzugt sind die sich aus den beigefügten Ansprüchen ergebenden Kombinationen solcher Aspekte und der entsprechenden Merkmale.

Weitere Ausführungsformen ergeben sich den anhand der in den Figuren näher erläuterten Ausführungsbeispielen und den Beispielen. Hierbei zeigen:

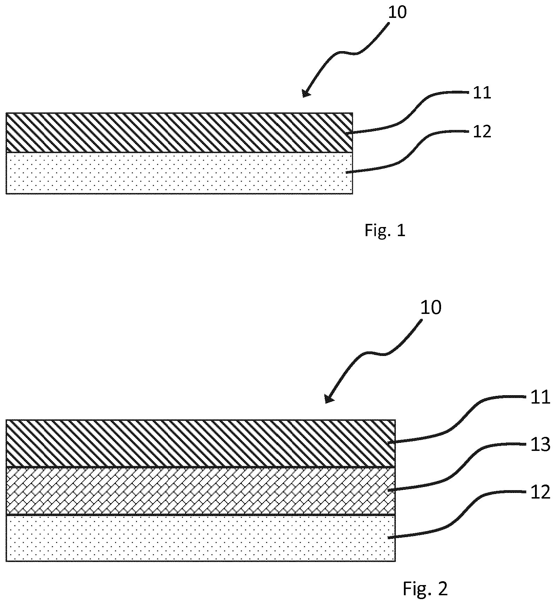

Fig. 1 bis 4 mögliche Schichtaufbauten von erfindungsgemäßen Releasesubstraten.
Fig. 1 zeigt ein Releasesubstrat 10, das aus einem Trägersubstrat 11 (beispielsweise Papier oder eine Folie) und einer Releaseschicht 12 besteht. Das Trägersubstrat 11 weist eine Vorderseite und eine der Vorderseite gegenüberliegende Rückseite auf und auf der Vorderseite des Trägersubstrats 11 ist eine Releaseschicht 12 angeordnet, die aus einem polymere Bindemittel und einem Wachs auf Basis eines pflanzlichen Öls besteht.
Fig. 2 zeigt ein Releasesubstrat 10, das aus einem Trägersubstrat 11 (beispielsweise Papier oder eine Folie), einer Zwischenschicht 13 und einer Releaseschicht 12 besteht. Das Trägersubstrat 11 weist eine Vorderseite und eine der Vorderseite gegenüberliegende Rückseite auf und auf der Vorderseite des Trägersubstrats 11 ist die Zwischenschicht 13 angeordnet. Auf der Zwischenschicht 13 ist wiederrum die Releaseschicht 12 angeordnet, die aus einem polymere Bindemittel und einem Wachs auf Basis eines pflanzlichen Öls besteht. Vorzugsweise enthält die Zwischenschicht 13 ein Pigment und ein Bindemittel.

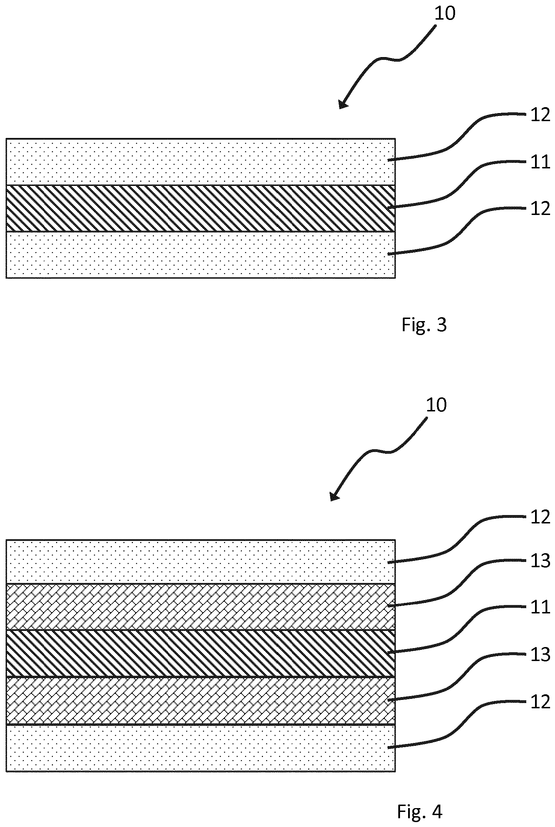

Fig. 3 zeigt ein Releasesubstrat 10, das aus einem Trägersubstrat 11 (beispielsweise Papier oder eine Folie) und zwei Releaseschichten 12 besteht. Das Trägersubstrat 11 weist eine Vorderseite und eine der Vorderseite gegenüberliegende Rückseite auf und sowohl auf der Vorderseite als auch auf der Rückseite des Trägersubstrats 11 ist jeweils eine Releaseschicht 12 angeordnet, die aus einem polymere Bindemittel und einem Wachs auf Basis eines pflanzlichen Öls besteht.
Fig. 4 zeigt ein Releasesubstrat 10, das aus einem Trägersubstrat 11 (beispielsweise Papier oder eine Folie), zwei Zwischenschichten 13 und zwei Releaseschichten 12 besteht. Das Trägersubstrat 11 weist eine Vorderseite und eine der Vorderseite gegenüberliegende Rückseite auf und sowohl auf der Vorderseite als auch auf der Rückseite des Trägersubstrat 11 ist jeweils eine Zwischenschicht 13 angeordnet. Auf jeder der Zwischenschichten 13 ist wiederrum jeweils eine Releaseschicht 12 angeordnet, die aus einem polymere Bindemittel und einem Wachs auf Basis eines pflanzlichen Öls besteht. Vorzugsweise enthalten die Zwischenschichten ein Pigment und ein Bindemittel.

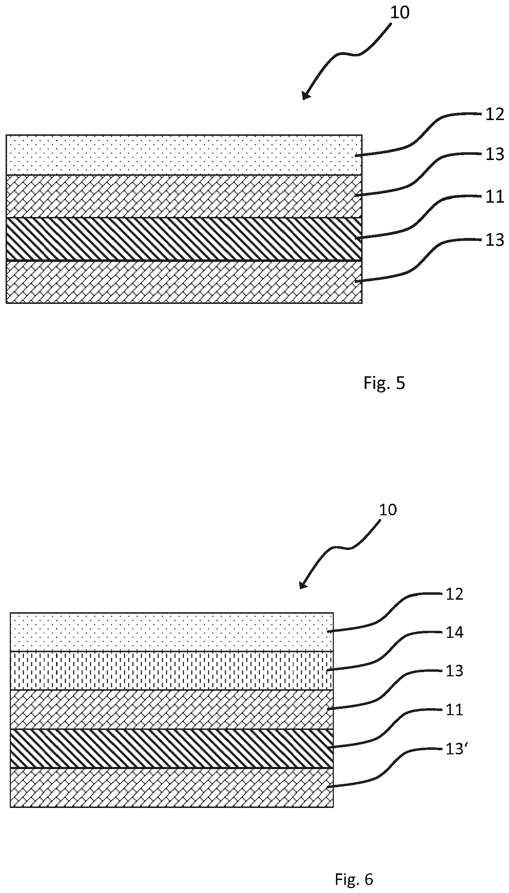

Fig. 5 zeigt ein Releasesubstrat 10, das aus einem Trägersubstrat 11 (beispielsweise Papier oder eine Folie), zwei Zwischenschichten 13 und einer Releaseschicht 12 besteht. Das Trägersubstrat 11 weist eine Vorderseite und eine der Vorderseite gegenüberliegende Rückseite auf und sowohl auf der Vorderseite als auch auf der Rückseite des Trägersubstrats 11 ist jeweils eine Zwischenschicht 13 angeordnet. Auf einer der Zwischenschichten 13 ist wiederrum eine Releaseschicht 12 angeordnet, die aus einem polymere Bindemittel und einem Wachs auf Basis eines pflanzlichen Öls besteht. Vorzugsweise enthalten die Zwischenschichten ein Pigment und ein Bindemittel.
Fig. 6 zeigt ein Releasesubstrat 10 mit Thermodruckeigenschaften, das aus einem Trägersubstrat 11 (beispielsweise Papier oder eine Folie), zwei Zwischenschichten 13 und 13', einer wärmeempfindlichen Aufzeichnungsschicht 14 und einer Releaseschicht 12 besteht. Das Trägersubstrat 11 weist eine Vorderseite und eine der Vorderseite gegenüberliegende Rückseite auf und sowohl auf der Vorderseite als auch auf der Rückseite des Trägersubstrats 11 ist jeweils eine Zwischenschicht 13 und 13' angeordnet. In einer Alternativen Ausgestaltung kann auf die Zwischenschicht 13' verzichtet werden oder die Schicht kann durch eine Klebstoffschicht ersetzt werden. Auf der vorderseitigen Zwischenschicht 13 ist eine wärmeempfindliche Aufzeichnungsschicht 14 angeordnet, auf der wiederrum eine Releaseschicht 12 angeordnet ist, die aus einem polymere Bindemittel und einem Wachs auf Basis eines pflanzlichen Öls besteht. Vorzugsweise enthalten die Zwischenschichten 13 und 13' ein Pigment und ein Bindemittel. Die wärmeempfindliche Aufzeichnungsschicht 14 enthält einen Farbstoffvorläufer und einen mit dem Farbstoffvorläufer bei der Zuführung von Wärme reagierenden (Farb-)Entwickler.

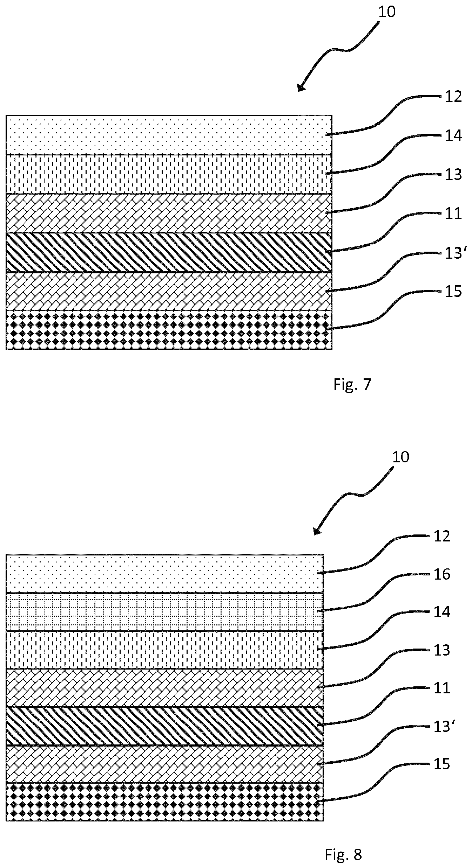

Fig. 7 zeigt ein Releasesubstrat 10 mit Thermodruckeigenschaften, das aus einem Trägersubstrat 11 (beispielsweise Papier oder eine Folie), zwei Zwischenschichten 13 und 13', einer wärmeempfindlichen Aufzeichnungsschicht 14, einer Releaseschicht 12 und einer Klebstoffschicht 15 besteht. Das Trägersubstrat 11 weist eine Vorderseite und eine der Vorderseite gegenüberliegende Rückseite auf und sowohl auf der Vorderseite als auch auf der Rückseite des Trägersubstrat 11 ist jeweils eine Zwischenschicht 13 und 13' angeordnet. In einer Alternativen Ausgestaltung kann auf die Zwischenschicht 13' verzichtet werden, sodass die Klebstoffschicht 15 direkt auf dem Trägersubstrat 11 aufliegt. Auf der vorderseitigen Zwischenschicht 13 ist eine wärmeempfindliche Aufzeichnungsschicht 14 angeordnet, auf der wiederrum eine Releaseschicht 12 angeordnet ist, die aus einem polymere Bindemittel und einem Wachs auf Basis eines pflanzlichen Öls besteht. Vorzugsweise enthalten die Zwischenschichten 13 und 13' ein Pigment und ein Bindemittel. Die wärmeempfindliche Aufzeichnungsschicht 14 enthält einen Farbstoffvorläufer und einen mit dem Farbstoffvorläufer bei der Zuführung von Wärme reagierenden (Farb-)Entwickler. Auf der rückseitig angeordneten Zwischenschicht 13' ist eine Klebstoffschicht 15 angeordnet. Das Releasesubstrat kann in Form einer langen Bahn hergestellt und anschießend so aufgerollt werden, dass die Klebstoffschicht 15 auf der Releaseschicht 12 aufliegt und sich bei Bedarf rückstandslos abziehen lässt.
Fig. 8 zeigt ein Releasesubstrat 10 mit Thermodruckeigenschaften. Das abgebildete Releasesubstrat unterscheidet sich von dem in Figur 7 abgebildeten Releasesubstrat durch die Anwesenheit einer Schutzschicht 16 (Topcoat) zwischen der wärmempfindlichen Aufzeichnungsschicht 14 und der Releaseschicht 12. Als Schutzschicht können gängige als Schutzschicht und im Stand der Technik bekannte Schutzschichten verwendet werden.

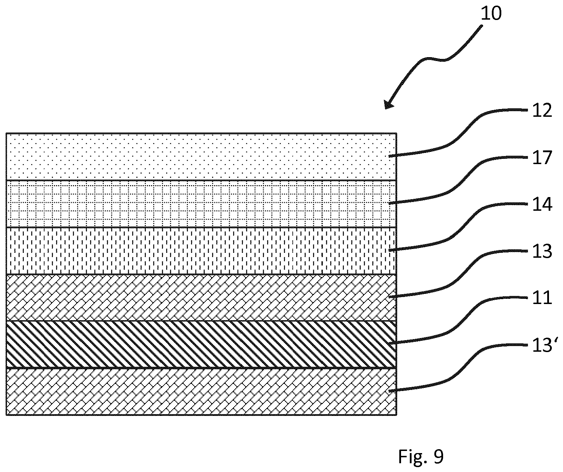

Fig. 9 zeigt ein Releasesubstrat 10 mit Thermodruckeigenschaften, das aus einem Trägersubstrat 11 (beispielsweise Papier oder eine Folie), zwei Zwischenschichten 13 und 13', einer wärmeempfindlichen Aufzeichnungsschicht 14, einer zusätzlichen Zwischenschicht 17 und einer Releaseschicht 12 besteht. Das Trägersubstrat 11 weist eine Vorderseite und eine der Vorderseite gegenüberliegende Rückseite auf und sowohl auf der Vorderseite als auch auf der Rückseite des Trägersubstrat 11 ist jeweils eine Zwischenschicht 13 und 13' angeordnet. In einer Alternativen Ausgestaltung kann auf die Zwischenschicht 13' verzichtet werden, die Schicht kann durch eine Klebstoffschicht ersetzt werden oder die Schicht kann mit einer Klebstoffschicht beschichtet werden. Auf der vorderseitigen Zwischenschicht 13 ist eine wärmeempfindliche Aufzeichnungsschicht 14 angeordnet, auf der wiederrum eine zusätzliche Zwischenschicht 17 aufweist. Die Zwischenschicht 17 kann dabei dieselbe Ausgestaltung aufweisen, wie die Zwischenschicht 13. Auf der Zwischenschicht 17 ist eine Releaseschicht 12 angeordnet, die aus einem polymere Bindemittel und einem Wachs auf Basis eines pflanzlichen Öls besteht. Vorzugsweise enthalten die Zwischenschichten 17, 13 und 13' ein Pigment und ein Bindemittel. Die wärmeempfindliche Aufzeichnungsschicht 14 enthält einen Farbstoffvorläufer und einen mit dem Farbstoffvorläufer bei der Zuführung von Wärme reagierenden (Farb-)Entwickler.

### Beispiel 1: Herstellung eines erfindungsgemäßen Releasesubstrates:

Als Trägersubstrat wurde ein Paper aus Kurzfaserstoffen (100 % Kurzfaserzellstoff) mit einer Mahlung von 50°SR und einem Zusatz mit einem Massenanteil von 1 % Talkum als Füllstoff, bezogen auf die Gesamtmasse des Papiers, auf einer Papiermaschine eine in der Masse mit Harz-Leimung versehene Papierbahn mit einer flächenbezogenen Masse von 33,3 g/m² hergestellt. Das hergestellte Trägersubstrat wurde bei einer Linienlast von 100kN/m und einer Temperatur von 100 °C kalandriert.

Mit einem Curtain-Coater wurde frontseitig ein Vorstrich, umfassend Wasser, eine wässrige Dispersion eines Acryl-Acetat-Copolymers (Feststoffgehalt 33%, Massenanteil im Vorstrich 0,03 % (otro); Sterocoll BL), eine wässrige Dispersion eines Acryl- Copolymers (Feststoffgehalt 40 %, Massenanteil im Vorstrich 1,27 % (otro); Handelsbezeichnung: Sterocoll FS), eine wässrige Dispersion eines Styren-Acrylat-Copolymers (Feststoffgehalt 50 %, Massenanteil im Vorstrich 70,5 % (otro); Handelsbezeichnung: Sterocoll FS), und Kaolin (Feststoffgehalt 70 %, Massenanteil im Vorstrich 28,2 % (otro); Handelsbezeichnung: Capim NP), mit einem Auftragsgewicht von 3,5 g/m² auf das Papier aufgetragen und der Vorstrich wurde anschließend durch IR (Infrarotstrahlung) und Lufttrocknung getrocknet, sodass eine Zwischenschicht resultierte.

Mit einem Curtain-Coater wurde auf die Zwischenschicht ein Releasestrich, umfassend Wasser, ein Wachs auf Basis eines pflanzlichen Öls (Feststoffgehalt 30 %, Massenanteil im Vorstrich 82 % (otro); Handelsbezeichnung: SWX 155), eine Polyacrylat-Dispersion (Feststoffgehalt 48 %, Massenanteil im Vorstrich 16,4 % (otro); Handelsbezeichnung: Tecryl PB 16/3), und eine Mischung nichtionischer Tenside (Feststoffgehalt 100 %, Massenanteil im Vorstrich 1,6 % (otro); Handelsbezeichnung: Metolat 700), mit einem Auftragsgewicht von 4 g/m² aufgetragen und der Releasestrich wurde anschließend durch IR (Infrarotstrahlung) und Lufttrocknung getrocknet, sodass eine Releaseschicht resultierte.

Das fertige Releasesubstrat (Releasepapier) zeigte ausgesprochen gute dehäsive Eigenschaften gegenüber üblichen Haftetiketten, wobei sich auch stark klebende Haftetiketten gut abziehen ließen. Auch beim schnellen Abziehen der Etiketten im spitzen Winkel löste sich die Releaseschicht nicht vom Trägersubstrat.

Es hat sich zudem gezeigt, dass das Releasesubstrat kompostiert werden konnte.

## Patentansprüche

1. Releasesubstrat (10) umfassend
a) ein Trägersubstrat (11), aufweisend eine Vorderseite und eine der Vorderseite gegenüberliegende Rückseite,
und
b) eine vorderseitig und/oder rückseitig des Trägersubstrats angeordnete Releaseschicht (12),
**dadurch gekennzeichnet, dass** die Releaseschicht ein polymeres Bindemittel und ein Wachs auf Basis eines pflanzlichen Öls umfasst oder daraus besteht,
wobei
- das Trägersubstrat ein Papier oder eine Pappe ist,
- das Releasesubstrat zusätzlich eine Zwischenschicht (13, 13') enthält und die Zwischenschicht zwischen dem Trägersubstrat und der Releaseschicht angeordnet ist
und
- die Zwischenschicht ein anorganisches Pigment enthält, ausgewählt aus der Liste bestehend aus kalziniertem Kaolin, Kaolin, Kaolinit, Magnesiumsilikathydrat, Siliziumoxid, Bentonit, Calziumcarbonat, Aluminiumhydroxid, Aluminiumoxid und Böhmit.

2. Releasesubstrat nach Anspruch 1, wobei es sich bei dem Wachs auf Basis eines pflanzlichen Öls um ein Wachs auf Basis eines Öls ausgewählt aus der Liste umfassend Palmöl, Kokosöl, Mohnöl, Olivenöl, Leinöl, Sojaöl, Sonnenblumenöl, Distelöl und Rapsöl handelt.

3. Releasesubstrat nach Anspruch 1, wobei es sich bei dem Wachs auf Basis eines pflanzlichen Öls um ein Wachs auf Basis eines Sojaöls handelt.

4. Releasesubstrat nach Anspruch 1, 2 oder 3, wobei der Massenanteil des Wachses in der Releaseschicht 6 bis 98 % beträgt, vorzugsweise 10 bis 98 %, besonders bevorzugt 20 bis 90 % beträgt, weiter bevorzugt 50 bis 89 % beträgt, bezogen auf die Gesamtmasse der Releaseschicht.

5. Releasesubstrat nach einem der vorherigen Ansprüche, wobei der Massenanteil des Wachses in der Releaseschicht 50 bis 78 % beträgt, bezogen auf die Gesamtmasse der Releaseschicht.

6. Releasesubstrat nach einem der vorherigen Ansprüche, wobei das Wachs einen Schmelzpunkt über 40 °C, vorzugsweise über 50 °C, besonders bevorzugt über 60 °C aufweist.

7. Releasesubstrat nach einem der vorherigen Ansprüche, wobei es sich bei dem polymeren Bindemittel um ein vernetztes oder unvernetztes Bindemittel handelt, ausgewählt aus der Gruppe bestehend aus Stärke, Polyvinylalkohol, carboxylgruppenmodifiziertem Polyvinylalkohol, Ethylen-Vinylalkohol-Copolymer, einer Kombination aus Polyvinylalkohol und Ethylen-Vinylalkohol-Copolymer, Ethylen-Vinylacetat-Copolymer, silanolgruppen-modifiziertem Polyvinylalkohol, diaceton-modifiziertem Polyvinylalkohol, Acrylat-Copolymer, modifiziertem Polyethylenglycol, unmodifiziertem Polyethylenglycol, α-isodecyl-ω-hydroxy-Poly(oxy-1,2-ethanediyl), Styrol-Butadien-Latex, Styrol-Acrylat-Polymeren und Mischungen hieraus.

8. Releasesubstrat nach einem der vorherigen Ansprüche, wobei das polymere Bindemittel ein oder mehrere Styrol-Acrylat-Polymeren umfasst oder daraus besteht.

9. Releasesubstrat nach einem der vorherigen Ansprüche, wobei der Massenanteil des polymeren Bindemittels in der Releaseschicht 94 bis 2 % beträgt, vorzugsweise 80 bis 10 % beträgt, bezogen auf die Gesamtmasse der Releaseschicht.

10. Releasesubstrat nach einem der vorherigen Ansprüche, wobei der Massenanteil des polymeren Bindemittels in der Releaseschicht 50 bis 11 % beträgt, bezogen auf die Gesamtmasse der Releaseschicht.

11. Releasesubstrat nach einem der vorherigen Ansprüche, wobei das Releasesubstrat zusätzlich eine wärmempfindliche Aufzeichnungsschicht (14) enthält, die einen Farbstoffvorläufer und einen mit dem Farbstoffvorläufer bei der Zuführung von Wärme reagierenden (Farb-)Entwickler enthält.

12. Releasesubstrat nach einem der vorherigen Ansprüche, wobei die Releaseschicht (12) zusätzlich ein Wachs auf Basis gesättigter Kohlenwasserstoffe umfasst.

13. Verwendung eines Releasesubstrats nach einem der Ansprüche 1 bis 12, als selbstklebendes Ticket, selbstklebenden Kaufbeleg, selbstklebendes Etikett oder selbstklebende Eintrittskarte.

14. Verfahren zur Herstellung eines Releasesubstrats nach einem der Ansprüche 1 bis 12, umfassend die folgenden Schritte
(i) Herstellen oder Bereitstellen eines Trägersubstrates,
a) Herstellen oder Bereitstellen eines Strichs, umfassend Pigmente und Bindemittel,
b) Auftragen des hergestellten oder bereitgestellten Strichs auf eine Seite des Trägersubstrates und anschließendes Trocknen des Strichs, sodass eine Zwischenschicht resultiert,
(ii) Herstellen oder Bereitstellen eines Releasestrichs umfassend eine Wachs-Emulsion, wobei das Wachs ein Wachs auf Basis eines pflanzlichen Öls ist,
(iii) Auftragen des Releasestrichs auf eine Seite des Trägersubstrates und anschließendes Trocknen des Releasestrichs, sodass eine Releaseschicht resultiert.

## Claims

1. Release substrate (10) comprising
a) a carrier substrate (11) having a front side and a reverse side opposite the front side,
and
b) a release layer (12) disposed on the front side and/or reverse side of the carrier substrate,
**characterized in that** the release layer comprises or consists of a polymeric binder and a wax based on a vegetable oil,
wherein
- the carrier substrate is a paper or paperboard,
- the release substrate additionally contains an interlayer (13, 13') and the interlayer is disposed between the carrier substrate and the release layer
and
- the interlayer contains an inorganic pigment selected from the list consisting of calcined kaolin, kaolin, kaolinite, magnesium silicate hydrate, silicon oxide, bentonite, calcium carbonate, aluminium hydroxide, aluminium oxide and boehmite.

2. Release substrate according to Claim 1, wherein the wax based on a vegetable oil is a wax based on an oil selected from the list comprising palm oil, coconut oil, poppyseed oil, olive oil, linseed oil, soya oil, sunflower oil, safflower oil and rapeseed oil.

3. Release substrate according to Claim 1, wherein the wax based on a vegetable oil is a wax based on a soya oil.

4. Release substrate according to Claim 1, 2 or 3, wherein the proportion by mass of the wax in the release layer is 6% to 98%, preferably 10% to 98%, more preferably 20% to 90%, further preferably 50% to 89%, based on the total mass of the release layer.

5. Release substrate according to any of the preceding claims, wherein the proportion by mass of the wax in the release layer is 50% to 78%, based on the total mass of the release layer.

6. Release substrate according to any of the preceding claims, wherein the wax has a melting point above 40°C, preferably above 50°C, more preferably above 60°C.

7. Release substrate according to any of the preceding claims, wherein the polymeric binder is a crosslinked or uncrosslinked binder selected from the group consisting of starch, polyvinyl alcohol, carboxyl group-modified polyvinyl alcohol, ethylene-vinyl alcohol copolymer, a combination of polyvinyl alcohol and ethylene-vinyl alcohol copolymer, ethylene-vinyl acetate copolymer, silanol group-modified polyvinyl alcohol, diacetone-modified polyvinyl alcohol, acrylate copolymer, modified polyethylene glycol, unmodified polyethylene glycol, α-isodecyl-ω-hydroxypoly(oxy-1,2-ethanediyl), styrene-butadiene latex, styrene-acrylate polymers and mixtures thereof.

8. Release substrate according to any of the preceding claims, wherein the polymeric binder comprises or consists of one or more styrene-acrylate polymers.

9. Release substrate according to any of the preceding claims, wherein the proportion by mass of the polymeric binder in the release layer is 94% to 2%, preferably 80% to 10%, based on the total mass of the release layer.

10. Release substrate according to any of the preceding claims, wherein the proportion by mass of the polymeric binder in the release layer is 50% to 11%, based on the total mass of the release layer.

11. Release substrate according to any of the preceding claims, wherein the release substrate additionally contains a heat-sensitive recording layer (14) containing a dye precursor and a (colour) developer that reacts with the dye precursor when heat is supplied.

12. Release substrate according to any of the preceding claims, wherein the release layer (12) additionally contains a wax based on saturated hydrocarbons.

13. Use of a release substrate according to any of Claims 1 to 12 as a self-adhesive ticket, self-adhesive sales receipt, self-adhesive label or self-adhesive entry ticket.

14. Process for producing a release substrate according to any of Claims 1 to 12, comprising the following steps:
(i) producing or providing a carrier substrate,
a) producing or providing a coat comprising pigments and binders,
b) applying the coat produced or provided to one side of the carrier substrate and then drying the coat, resulting in an interlayer,
(ii) producing or providing a release coat comprising a wax emulsion, where the wax is a wax based on a vegetable oil,
(iii) applying the release coat to one side of the carrier substrate and then drying the release coat, resulting in a release layer.

## Revendications

1. Substrat antiadhésif (10) comprenant
a) un substrat de support (11), comportant une face avant et une face arrière opposée à la face avant,
et
b) une couche antiadhésive (12) disposée sur la face avant et/ou sur la face arrière du substrat de support,
**caractérisé en ce que** la couche antiadhésive comprend ou est constituée d'un liant polymère et d'une cire à base d'huile végétale,
dans lequel
- le substrat de support est un papier ou un carton,
- le substrat antiadhésif contient en outre une couche intermédiaire (13, 13') et la couche intermédiaire est disposée entre le substrat de support et la couche antiadhésive
et
- la couche intermédiaire contient un pigment inorganique sélectionné dans la liste comprenant le kaolin calciné, le kaolin, la kaolinite, le silicate de magnésium hydraté, l'oxyde de silicium, la bentonite, le carbonate de calcium, l'hydroxyde d'aluminium, l'oxyde d'aluminium et la boehmite.

2. Substrat antiadhésif selon la revendication 1, dans lequel la cire à base d'huile végétale est une cire à base d'une huile sélectionnée dans la liste comprenant l'huile de palme, l'huile de coco, l'huile de pavot, l'huile d'olive, l'huile de lin, l'huile de soja, l'huile de tournesol, l'huile de carthame et l'huile de colza.

3. Substrat antiadhésif selon la revendication 1, dans lequel la cire à base d'huile végétale est une cire à base d'huile de soja.

4. Substrat antiadhésif selon la revendication 1, 2 ou 3, dans lequel la fraction massique de la cire présente dans la couche antiadhésive est comprise entre 6 et 98 %, si possible entre 10 et 98 %, préférablement entre 20 et 90 % et idéalement entre 50 et 89 %, en fonction de la masse totale de la couche antiadhésive.

5. Substrat antiadhésif selon l'une des revendications précédentes, dans lequel la fraction massique de la cire présente dans la couche antiadhésive est comprise entre 50 et 78 %, en fonction de la masse totale de la couche antiadhésive.

6. Substrat antiadhésif selon l'une des revendications précédentes, dans lequel la cire possède un point de fusion supérieur à 40 °C, préférablement supérieur à 50 °C et idéalement supérieur à 60 °C.

7. Substrat antiadhésif selon l'une des revendications précédentes, dans lequel le liant polymère est un liant réticulé ou non réticulé, sélectionné dans le groupe comprenant l'amidon, l'alcool polyvinylique, l'alcool polyvinylique modifié par un groupe carboxyle, le copolymère éthylène-alcool vinylique, une combinaison d'alcool polyvinylique et de copolymère éthylène-alcool vinylique, le copolymère éthylène-acétate de vinyle, l'alcool polyvinylique modifié par un groupe silanol, l'alcool polyvinylique modifié par la diacétone, le copolymère d'acrylate, le polyéthylène glycol modifié, le polyéthylène glycol non modifié, l'α-isodécyl-ω-hydroxypoly(oxy-1,2-éthanediyle), le latex de styrène-butadiène, les polymères de styrène-acrylate, et les mélanges de ceux-ci.

8. Substrat antiadhésif selon l'une des revendications précédentes, dans lequel le liant polymère comprend ou est constitué d'un ou plusieurs polymères de styrène-acrylate.

9. Substrat antiadhésif selon l'une des revendications précédentes, dans lequel la fraction massique du liant polymère présent dans la couche antiadhésive est comprise entre 94 et 2 %, préférablement entre 80 et 10 %, en fonction de la masse totale de la couche antiadhésive.

10. Substrat antiadhésif selon l'une des revendications précédentes, dans lequel la fraction massique du liant polymère présent dans la couche antiadhésive est comprise entre 50 et 11 %, en fonction de la masse totale de la couche antiadhésive.

11. Substrat antiadhésif selon l'une des revendications précédentes, dans lequel se trouve en outre une couche d'enregistrement thermosensible (14) qui contient un précurseur de colorant et un révélateur (chromogène) réagissant avec le précurseur de colorant sous l'effet de la chaleur.

12. Substrat antiadhésif selon l'une des revendications précédentes, dans lequel la couche antiadhésive (12) comprend en outre une cire à base d'hydrocarbures saturés.

13. Utilisation d'un substrat antiadhésif selon l'une des revendications 1 à 12 en tant que ticket autocollant, ticket de caisse autocollant, étiquette autocollante ou billet d'entrée autocollant.

14. Procédé de fabrication d'un substrat antiadhésif selon l'une des revendications 1 à 12, comprenant les étapes suivantes
(i) fabrication ou préparation d'un substrat de support,
a) fabrication ou préparation d'un revêtement comportant des pigments et des liants,
b) application du revêtement fabriqué ou préparé sur un côté du substrat de support suivie du séchage du revêtement, de sorte qu'il en résulte une couche intermédiaire,
(ii) fabrication ou préparation d'un revêtement antiadhésif comprenant une émulsion de cire, dans laquelle la cire est une cire à base d'huile végétale,
(iii) application du revêtement antiadhésif sur un côté du substrat de support suivie du séchage du revêtement antiadhésif, de sorte qu'il en résulte une couche antiadhésive.
